# EUROPEAN PATENT APPLICATION

(11) **EP 4 657 022 A1**
(43) Date of publication of application: **03.12.2025**
(21) Application number: 23918399.9
(22) Date of filing: 27.01.2023
(51) Int. Cl.: G01C 21/34

(54) **MAP PROVISION DEVICE**

(71) Applicant: Astemo, Ltd., Chiyoda-ku, Tokyo 1000004 (JP)
(72) Inventor: WATAHIKI, Tomoaki, Hitachinaka-shi, Ibaraki 312-8503 (JP)
(74) Representative: MERH-IP Matias Erny Reichl Hoffmann Patentanwälte PartG mbB
(86) International application number: PCT/JP2023/002548
(87) International publication number: WO 2024/157435

(57) **Abstract**

Provided is a map provision device capable of providing, to an autonomous driving control unit, high definition map information including a parking lot map in consideration of a parking method, and a peripheral technology thereof. A map provision device 100 includes a map storage unit 130 that stores high definition map information including lane information; a map update unit 120 that adds, to the high definition map information, parking lot link information available for travel from a lane link to a predetermined parking space in the high definition map information; and a map output unit 150 that outputs updated high definition map information.

## Description

### Technical Field

The present invention relates to a map provision device.

### Background Art

In recent years, to achieve a safe and secure traffic society, expectations for autonomous driving vehicles are growing, and technical development has been made in various countries around the world. The autonomous driving vehicles achieve autonomous driving travel by recognition of a surrounding situation in real time using sensor information, such as cameras and radar mounted on the vehicle, for example. In such autonomous driving travel, high definition map information is also used to complement the recognition processing using the sensor information.

Patent Literature 1 discloses an information processing device that generates connection map information in which private map information and public road map information are connected to each other, based on a reference point indicating a common position between the private map information including a private land area and the public road map information including information regarding a public road.

### Citation List

### Patent Literature

Patent Literature 1: WO2020/090306

### Summary of Invention

### Technical Problem

In Patent Literature 1, the connection map information in which the private map information and the public road map information are connected to each other is generated so that the connection map can be used to control the autonomous driving.

However, the method disclosed in Patent Literature 1 does not refer to a method of providing optimal map information according to how the public road can easily be traveled on or the situation of a travel route during the autonomous driving travel. The method disclosed in Patent Literature 1 does not even take into account the processing load and the like of the device that provides map information.

The present disclosure proposes a map provision device capable of providing, to an autonomous driving control unit, high definition map information including an optimal parking lot map according to the situation, and a peripheral technology thereof.

### Solution to Problem

One aspect of the present disclosure is a map provision device that provides high definition map information to an autonomous driving control device, including: a map storage unit that stores high definition map information including lane information; a map update unit that adds, to the high definition map information, parking lot link information available for travel from the lane link to a predetermined parking space in the high definition map information; and a map output unit that outputs the updated high definition map information to the autonomous driving control device. The map update unit adds parking lot link information corresponding to a parking method in the parking space to the high definition map information and generates updated new high definition map information.

### Advantageous Effects of Invention

According to the above-described aspect of the present disclosure, it is possible to provide high definition map information including parking lot link information to the autonomous driving control device, and for example, to provide, to the autonomous driving control device, the high definition map information from an arbitrary parking lot to an arbitrary parking lot according to the situation of a travel route. Further features related to the present disclosure will become apparent from the description of the specification and the accompanying drawings. Other problems, configurations, and advantageous effects will become apparent from the following description of an embodiment.

### Brief Description of Drawings

Fig. 1 is a block diagram illustrating Embodiment 1 of a map provision device according to the present disclosure.
Fig. 2 illustrates an example of high definition map information in the map provision device of Fig. 1.
Fig. 3 illustrates an example in which parking lot link information is added to the high definition map information in the map provision device of Fig. 1.
Fig. 4 is a flowchart of an example of the operation of the map provision device of Fig. 1.
Fig. 5 is a flowchart of an example of the operation of the map provision device of Fig. 1.
Fig. 6 illustrates an example of parking lot information in the map provision device of Fig. 1.
Fig. 7 illustrates an example of a method of adding parking lot information and parking lot link information to the high definition map information of Fig. 4.
Fig. 8 illustrates an example of a method of adding parking lot link information in consideration of reverse parking to the high definition map information of Fig. 4.
Fig. 9 illustrates an example of an autonomous driving travel section around a destination.
Fig. 10 illustrates a modification example of an autonomous driving travel section around a destination.
Fig. 11 illustrates an example of an autonomous driving travel section from an origin to a destination.

### Description of Embodiments

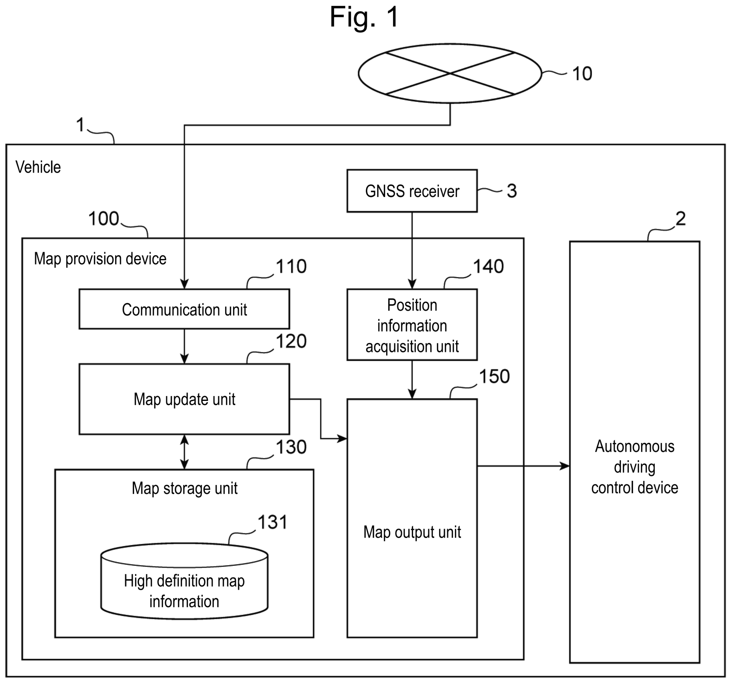

Fig. 1 is a block diagram illustrating Embodiment 1 of a map provision device according to the present disclosure. A map provision device 100 of the present embodiment is, for example, one of ECUs (Electronic Control Units) disposed on a vehicle 1, and provides high definition map information to an autonomous driving control device 2. The ECU is provided with at least one memory including a program code, and at least one processor configured to execute the program code. The map provision device 100 embodies the function of each unit described below by the processor executing the program code stored in advance in the memory of the ECU.

The map provision device 100 is provided with a communication unit 110 that receives high definition map information 131 required for autonomous driving and parking lot information required for automatic parking from a server 10 connected to a network or from a storage medium such as a USB; a map update unit 120 that adds parking lot information and parking lot link information to the high definition map information 131; a map storage unit 130 that stores the high definition map information 131; a position information acquisition unit 140 that projects a subject vehicle position on the high definition map information 131 using GNSS information from a GNSS receiver 3 that acquires position information of the subject vehicle; and a map output unit 150 that outputs to the autonomous driving control device 2 high definition map information 131n having the parking lot link information added.

The autonomous driving control device 2 is an ECU mounted on the vehicle, for example. The autonomous driving control device 2 is connected to various sensors and various actuators mounted on the vehicle 1, for example. The autonomous driving control device 2 controls the various actuators using the result of detection by the various sensors, and allows the vehicle 1 to autonomously travel along an autonomous driving travel section based on the high definition map information 131n received from the map provision device 100 and to autonomously park in the destination parking lot, thus performing autonomous driving.

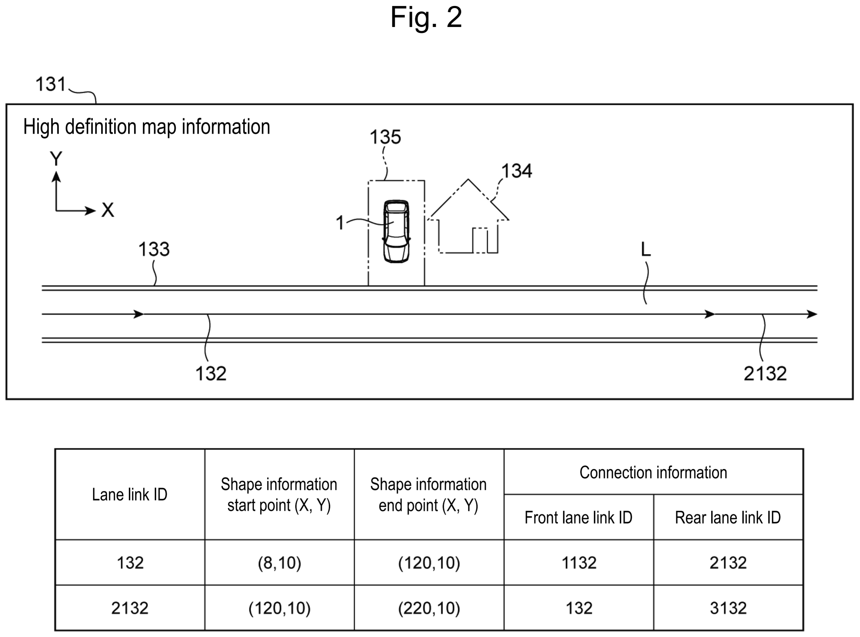

Fig. 2 illustrates an example of the high definition map information 131 in the map provision device 100 of Fig. 1. It is noted that in the following description, the direction along a lane L of the road is X direction, and the road width direction of the lane L is Y direction.

In the high definition map information 131, information on a lane link 132 and a road boundary line 133 for the lane L is recorded. The lane link 132 is set such that the lane (traffic lane) L of the road on which the vehicle travels is divided into predetermined sections in the direction (X direction) along the lane L. The lane link 132 includes a lane link ID that uniquely identifies the lane link itself and shape information indicating the shape of the lane L (for example, start point coordinates, end point coordinates, intermediate point coordinates, and the like). The shape information of the lane L includes information about the shape of the line connecting a start point, at least one intermediate point, and an end point that are set at the center of the lane L in the road width direction (Y direction).

In addition, the high definition map information 131 includes connection information indicating a connection relationship between the lane link and another lane link (for example, the lane link 132 and a lane link 2132). The road boundary line 133 includes a road boundary line ID that uniquely identifies the road boundary line 133 and shape information forming a road boundary line (for example, start point coordinates, end point coordinates, intermediate point coordinates, and the like). In the high definition map information 131, home information including location information of a home 134 as a destination or parking lot information including location information of a parking space 135 is not recorded.

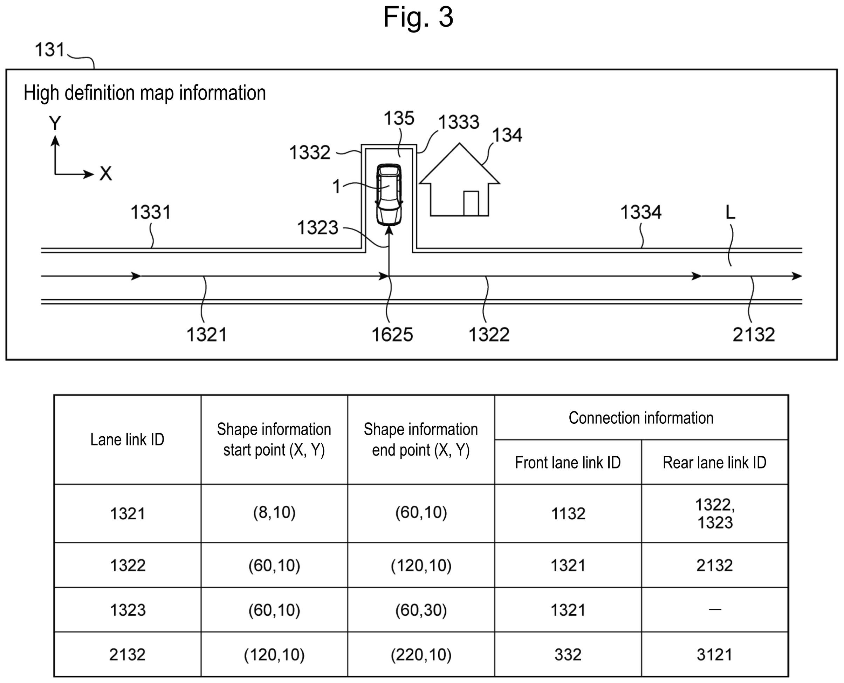

Fig. 3 is an example in which information on a parking lot link 1323 is added to the high definition map information 131 by the map update unit 120.

The map update unit 120 divides the lane link 132 illustrated in Fig. 2 into two lane links 1321 and 1322, and assigns an arbitrary lane link ID to each lane link.

In addition, the map update unit 120 generates the parking lot link 1323 that connects the lane link 1321 and the lane link 1322 to the parking space 135. The parking lot link 1323 includes information corresponding to a parking method in the parking space, and specifically includes information on a shape information start point and a shape information end point, and information on connection with other lane links. The map update unit 120 adds the information on the parking lot link 1323 to the high definition map information 131.

The map update unit 120 also assigns shape information and a lane link ID to the parking lot link 1323. In addition, the map update unit 120 updates the connection information of each lane link (the lane link 1321 and the lane link 1322).

The map update unit 120 sets a shape information start point 1625 on the lane L as a point at which the vehicle starts moving from the lane L toward the parking space 135. The map update unit 120 divides the lane link 132 into the lane link 1321 and the lane link 1322 at the shape information start point 1625.

The map update unit 120 also divides the road boundary line 133 into a road boundary line 1331 and a road boundary line 1334, and adds the information on a road boundary line 1332 and a road boundary line 1333 serving as a boundary of the parking space 135 to the high definition map information 131.

As described above, the map update unit 120 adds the parking lot information and the parking lot link information of a destination such as the home 134, for example, to the high definition map information 131 and generates updated new high definition map information 131n. The map output unit 150 outputs the updated new high definition map information 131n to the autonomous driving control device 2.

The autonomous driving control device 2 can achieve the automatic parking into the parking space 135 of the home 134 by controlling the moving path of the vehicle 1 in accordance with the parking lot information and the shape information of the parking lot link 1323 included in the updated new high definition map information 131n. By storing the updated new high definition map information 131n in the map storage unit 130, the map update unit 120 is not required to perform the process of adding the parking lot information and the parking lot link information to the high definition map information 131 for the same point.

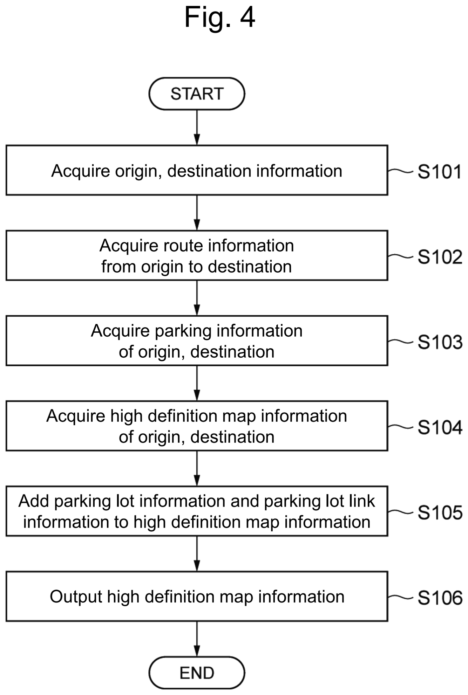

Fig. 4 is a flowchart of the operation of the map update unit 120.

The communication unit 110 is configured to receive origin information, destination information, and route information. For example, the origin information and the destination information are location information such as latitude and longitude, and the route information is point sequence information indicating a link ID sequence connecting the lane link IDs from an origin to a destination, and the positions of the shape information start point and the shape information end point of each lane link. Such information is provided from a navigation system mounted on the vehicle 1 to the map provision device 100.

The map update unit 120 acquires the origin information and the destination information received in the communication unit 110 (step S101). Next, the map update unit 120 acquires the route information from the origin to the destination received in the communication unit 110 (step S102). Further, the map update unit 120 acquires the parking information of the origin and the parking lot information of the destination (step S103). Such parking lot information may be acquired from the server 10 via the communication unit 110, or may be acquired from a storage medium such as a USB via the communication unit 110. The parking lot information will be described in detail later.

Next, the map update unit 120 acquires the high definition map information 131 around the origin and around the destination from the map storage unit 130 (step S104). For example, the map update unit 120 acquires the high definition map information 131 within a 100-m radius of the center point of the origin or destination from the map storage unit 130. The example of the high definition map information 131 is described referring to Fig. 2 in the above. Next, the map update unit 120 generates parking lot link information from the high definition map information 131 and the parking lot information, and adds the parking lot information and the parking lot link information to the high definition map information 131 (step S105). A method of adding the parking lot information to the high definition map information 131 will be described in detail later. Finally, the map update unit 120 allows the map storage unit 130 to store the updated new high definition map information 131n having the parking lot information and the parking lot link information of the origin and destination added.

When an origin or a destination is set, the map update unit 120 adds, to the high definition map information 131, parking lot link information of the origin or the destination set in the high definition map information 131, and updates to new high definition map information 131n. When the update has already been made and the high definition map information 131 of the origin or the destination includes the parking lot link information, the map update unit 120 replaces it with the updated high definition map information 131n.

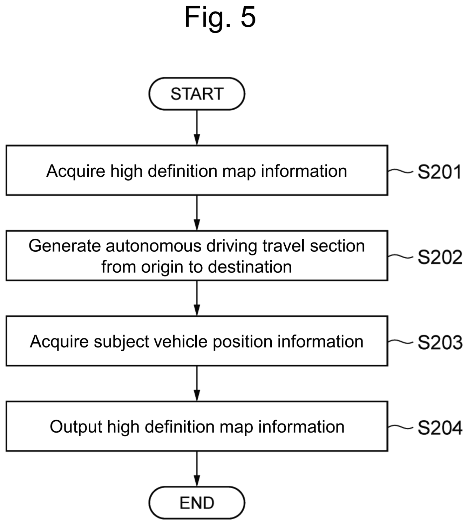

Fig. 5 is a flowchart of the operation of the map output unit 150.

The map output unit 150 acquires the high definition map information 131n from the origin to the destination from the map storage unit 130 (step S201).

Next, the map output unit 150 generates an autonomous driving travel section from the origin to the destination from the high definition map information 131n (step S202). The autonomous driving travel section is a detailed autonomous driving travel section using the high definition map information 131n, such as which lane should be traveled on from the origin to the destination, for example. An example of the autonomous driving travel section will be described later.

Next, the map output unit 150 acquires information indicating the current position of the subject vehicle from the position information acquisition unit 140 (step S203). Finally, the map output unit 150 outputs the high definition map information 131n corresponding to the subject vehicle position to the autonomous driving control device 2 (step S204). For example, at a point in time of getting on the vehicle before departure from the home, the map output unit 150 outputs to the autonomous driving control device 2 the high definition map information 131n of an area to a few-kilometer point on the route from the home parking lot.

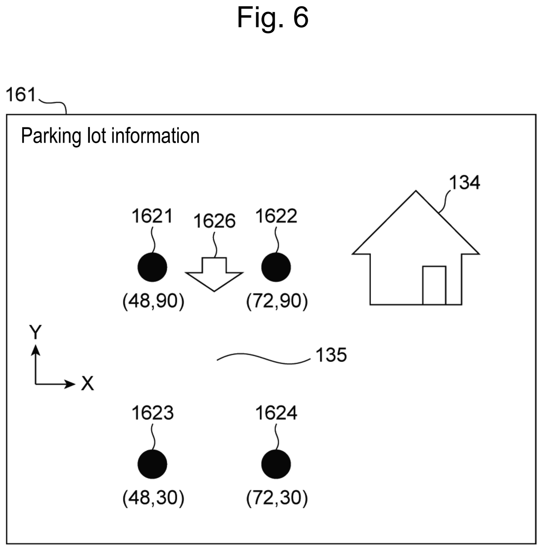

Fig. 6 illustrates an example of parking lot information 161.

The parking lot information 161 may be acquired from the server 10 via the communication unit 110, or may be acquired from a storage medium such as a USB via the communication unit 110 as described above. For example, the parking lot information 161 includes node information (1621 to 1624) of four corners indicating the region of the parking space 135. The node information is information indicating positions, and can be expressed with coordinates, for example. The parking lot information 161 includes parking vehicle direction information 1626 indicating the orientation (parking orientation) of the vehicle 1 when parking into the parking space 135. To indicate the orientation of the vehicle 1 when parking into the parking space 135, the node information 1623, 1624 may have an attribute such as the front side of the parking space, and the node information 1621, 1622 may have an attribute such as the back side of the parking space. The parking lot information 161 may not include the location information of the home 134 as a destination. It is noted that the parking lot information 161 may be one piece of node information of the center of the parking space 135. For example, the node information (1621 to 1624) of the four corners can be generated by the server 10 from the node information of the center of the parking space 135 and the dimensions of the standard parking space 135 (6 m in length, 2.5 m in width).

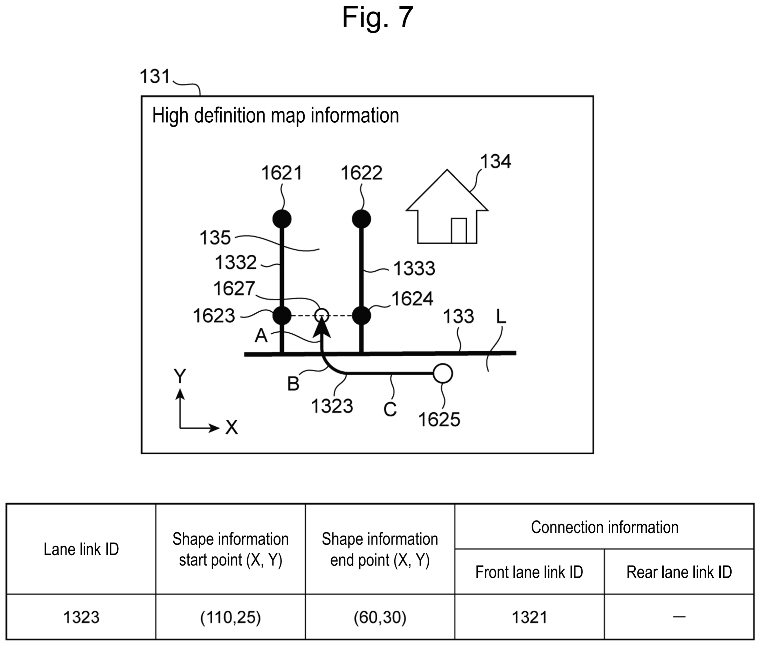

Fig. 7 illustrates an example of a method (step S105) of adding the parking lot information 161 and the parking lot link information to the high definition map information 131. In this example, the parking lot information 161 includes information for reversing the vehicle 1 toward the parking space 135 facing the road and parking the vehicle 1.

The map update unit 120 generates the parking lot link 1323 using the parking lot information 161 and the high definition map information 131. The example illustrated in Fig. 7 describes a method of generating the parking lot link 1323 for reversing the vehicle 1 toward the parking space 135 and parking the vehicle 1 with the front facing the road. Vehicle information may be calculated as standard vehicle information (e.g., 5 m in overall length, 2 m in overall width), or may be acquired from the server 10 or the USB via the communication unit 110.

The map update unit 120 sets a shape information end point 1627 of the parking lot link 1323 on the midpoint between the node information 1623 and the node information 1624 indicating the front side of the parking space included in the parking lot information 161. The map update unit 120 obtains the shape information start point 1625 of the parking lot link 1323 from the shape information end point 1627 of the parking lot link 1323. The shape information start point 1625 is represented by, for example, the X coordinate of the position displaced in the X direction along the lane L from the shape information end point 1627 a distance (18 m) of three times the length of the vehicle 1, and the Y coordinate of the position displaced in the -Y direction along the lane width direction from the road boundary line 133 a distance (2 m) of the width of the vehicle 1.

First, the map update unit 120 obtains a straight line A from the shape information end point 1627 of the parking lot link 1323 to the road boundary line 133 of the high definition map information 131. Next, the map update unit 120 obtains a curved line B from the straight line A to the position where the vehicle 1 is pulled over to the road boundary line 133, taking into account the turning radius of the vehicle 1. Next, the map update unit 120 obtains a straight line C from the curved line B to the shape information start point 1625. The map update unit 120 connects the straight line C, the curved line B, and the straight line A from the shape information start point 1625 to the shape information end point, generates shape points with arbitrary spacing, and generates the parking lot link 1323 having information on the shape points and the shape obtained by connecting these shape points with a line. In addition, the map update unit 120 generates the road boundary line 1332 that defines one side end of the parking space 135 by extending to the road boundary line 133 the straight line from the node information 1621 to the node information 1623. Using the same method, the map update unit 120 generates the road boundary line 1333 that defines the other side end of the parking space 135.

The map update unit 120 may externally generate the parking lot link 1323, for example, on the server 10, and acquire the parking lot link 1323 via the communication unit 110. Generating the parking lot link 1323 by a user on the server 10 allows generating a parking space with a complicated entry path, a multistory parking garage, and the like in a shape in line with the site. The map provision device 100 adds the information on the complicated parking lot link 1323 to the high definition map information 131, and transmits the updated new high definition map information 131n to the autonomous driving control device 2, thus enabling autonomous driving to a parking space with a more complicated entry path.

In generating the parking lot link 1323, a moving history (position information) of the subject vehicle position may be stored in the map provision device 100, and the parking lot link 1323 may be generated from the moving history. Since the parking lot link 1323 is generated from the moving history, the parking lot link 1323 can be generated using a proven traveling method. Since the map provision device 100 adds the proven parking lot link 1323 to the high definition map information 131 and transmits it as the new high definition map information 131n to the autonomous driving control device 2, more realistic autonomous driving to the parking lot can be achieved.

Meanwhile, the updated new high definition map information 131n includes, for each lane link, a link classification indicating the type of lane link, and a shape information start point classification indicating the type of shape information start point. In generating the parking lot link 1323, an attribute "parking lot (reverse)" is assigned to the link classification, and the shape information start point classification is set as a "stop point." The link classification and the shape information start point classification may be added only to the parking lot link.

Note that for the parking lot link 1323 in the case of moving forward and parking into the parking space 135, an attribute "parking lot (forward)" is assigned to the link classification. In addition, also for the parking lot link 1323 when the parking lot of Fig. 7 is the origin, the attribute "parking lot (forward)" is assigned to the link classification. The method of generating the parking lot link 1323 of the origin will be omitted.

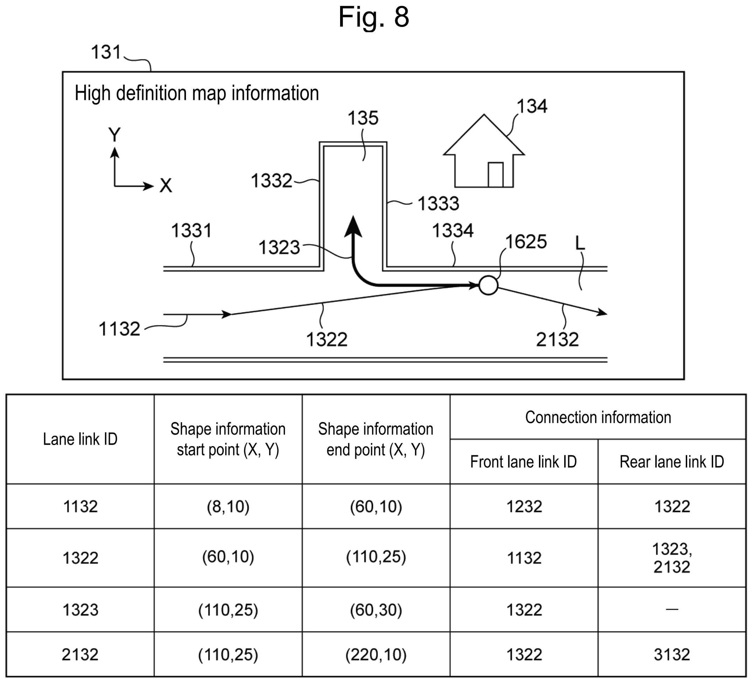

Fig. 8 illustrates an example in which information of the parking lot link 1323 in consideration of reverse parking is added to the high definition map information 131.

The method of dividing the lane link 132 and the road boundary line 133 of the high definition map information 131 has already been described with reference to Fig. 2 and Fig. 3. The map update unit 120 sets the shape information start point 1625 on the position displaced toward the parking space from the center of the lane L in the width direction. The map update unit 120 updates the high definition map information 131 such that the lane link 1322 has a shape from the center of the lane L of the road toward the shape information start point 1625 of the parking lot link 1323. The shape of the lane link 1322 may be a gentle curve toward the shape information start point 1625.

Herein, an example of the method (step S202) of generating, by the map output unit 150, an autonomous driving travel section from an origin to a destination using the updated new high definition map information 131n will be described. As illustrated in Fig. 8, when the destination is the home 134, the map output unit 150 generates an autonomous driving travel section on the basis of connection information of the lane links.

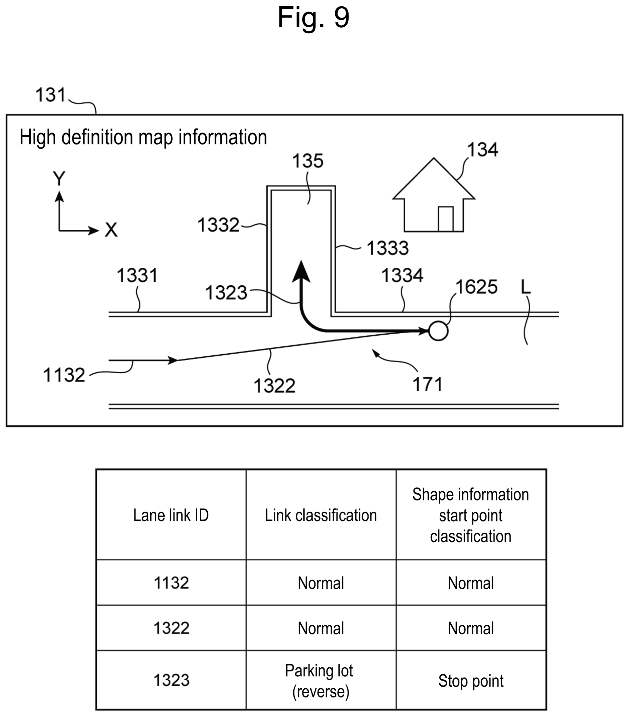

Fig. 9 illustrates an example of an autonomous driving travel section 171 around the destination.

The autonomous driving travel section 171 is made up of alignment of a lane link sequence: the lane link 1132, the lane link 1322, and the lane link (parking lot link) 1323, and includes, for each lane link, a link classification indicating the type of lane link and a shape information start point classification indicating the type of shape information start point. The classification of the shape information start point 1625 of the lane link 1323 is the "stop point," and the attribute "parking lot (reverse)" is assigned to the link classification. The map output unit 150 outputs to the autonomous driving control device 2 the updated new high definition map information 131n including the generated information on the autonomous driving travel section 171.

The autonomous driving control device 2 can control the autonomous driving in accordance with the shape information of the autonomous driving travel section 171. With the information "stop point" assigned to the autonomous driving travel section 171, the autonomous driving control device 2 can allow the vehicle 1 to temporarily stop at the stop point (the shape information start point 1625) at which the vehicle 1 is pulled over to the left side of the road. Further, with the attribute "parking lot (reverse)" assigned to the lane link 1323, the autonomous driving control device 2 can control the series of autonomous driving such as temporarily stopping the vehicle and then performing automatic parking in reverse into the parking space 135 along the shape points of the lane link 1323.

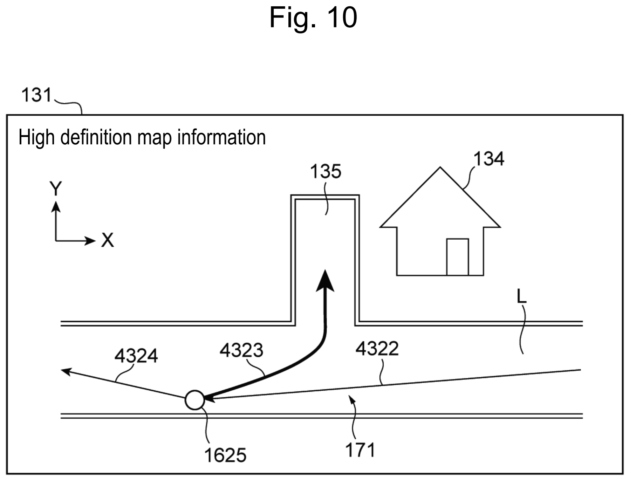

Fig. 10 illustrates an example of the high definition map information 131 when coming back to the home 134 from a lane link 4322.

The map update unit 120 generates a lane link 4323 for reverse parking from the lane L. The method of generating the lane link 4323 will be omitted. The autonomous driving travel section 171 generated by the map output unit 150 is made up of the lane link 4322 and the lane link 4323, and a stop point 1625 is assigned. The method of generating the autonomous driving travel section 171 will be omitted. The method of generating the lane link 4323 and the method of generating the autonomous driving travel section 171 when departing from the home 134 will be omitted.

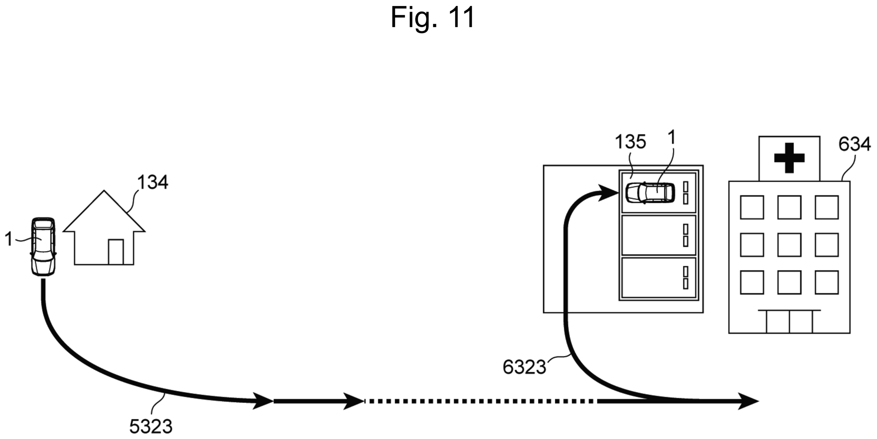

Fig. 11 illustrates an example of the autonomous driving travel section 171 from an origin 134 to a destination 634.

The map update unit 120 updates the high definition map information 131 around the origin and destination only when the origin and destination are specified. In the case of the origin and destination where autonomous driving travel has been performed in the past, the new high definition map information 131n having the parking lot information added has already been stored in the map storage unit 130. Thus, the map update unit 120 is not required to perform recalculating the process of adding the parking lot information to the high definition map information 131n and can update the high definition map information 131 of the origin and destination only by replacing it with the high definition map information 131n. Since only the high definition map information 131n around the origin and destination is updated, the processing load of the position information acquisition unit 140 and the map output unit 150 will not be increased.

As described above, the map provision device 100 of the present embodiment can add the parking lot information 161 to the high definition map information 131 and generate the new high definition map information 131n. In addition, the map provision device 100 can generate the autonomous driving travel section 171 based on the new high definition map information 131n and transmits it to the autonomous driving control device 2. The autonomous driving travel section 171 takes into account the traveling method of the vehicle up to parking in the parking space 135 of the home 134, for example. Thus, by controlling the autonomous driving using the autonomous driving travel section 171, the autonomous driving control device 2 can achieve the autonomous driving travel up to parking in the parking space 135 of the home 134 through traveling on a public road.

The map provision device 100 of the present embodiment can add the parking lot information 161 and the parking lot link information for parking with the front facing the road (reverse parking) to the high definition map information 131 and generate the new high definition map information 131n. The autonomous driving travel section 171 generated based on the new high definition map information 131n can be generated in consideration of pulling over to the road shoulder (in the present embodiment, pulling over to the left side) of the road in front of the parking space of the home 134 and stopping, and stopping the vehicle in reverse in the parking space. Thus, by controlling the autonomous driving using the autonomous driving travel section 171, even when the home parking lot requires reverse parking that reverses and parks the vehicle 1 such that the front faces the road, the autonomous driving control device 2 can achieve the autonomous driving travel up to parking in the parking space 135 of the home 134 through traveling on a public road.

The map provision device 100 of the present embodiment can add the information on the parking lot link 1323 generated by the external server 10 or the PC to the high definition map information 131 and generate the updated new high definition map information 131n. The user can generate the parking lot link 1323 of the parking space with a complicated entry path or of a multistory parking garage. Since the autonomous driving travel section 171 generated based on the new high definition map information 131n can take into account the parking space with a complicated entry path, the autonomous driving control device 2 can achieve the autonomous driving travel to the parking space through traveling on a complicated entry path by controlling the autonomous driving using the autonomous driving travel section 171.

The map provision device 100 of the present embodiment can store in the map storage unit 130 the new high definition map information 131n in which the traveling method to the parking space of the destination is taken into account. For the same destination, the map provision device 100 only need to read the new high definition map information 131n from the map storage unit 130. For the same destination, the map provision device 100 is not required to perform the process of adding the parking lot link 1323 to the high definition map information 131 and generating the new high definition map information 131n, and thus the processing load of the map provision device 100 is reduced.

The map provision device 100 of the present embodiment generates the new high definition map information 131n only for a point at which an origin or destination is set. The position information acquisition unit 140 can specify a subject vehicle position on the high definition map information 131n using a minimum amount of the high definition map information 131n required. The map output unit 150 can generate the autonomous driving travel section 171 using the minimum amount of the high definition map information 131n required.

Although the embodiment of the present invention has been described in detail above, the present invention is not limited to the aforementioned embodiment, and various design changes are possible in so far as they are within the spirit of the present invention in the scope of the claims. For example, the aforementioned embodiment has been described in detail to clearly illustrate the present invention, and the present invention need not include all of the configurations described in the embodiment. It is possible to replace a part of a configuration of an embodiment with a configuration of another embodiment. In addition, it is also possible to add, to a configuration of an embodiment, a configuration of another embodiment. Further, it is also possible to, for a part of a configuration of each embodiment, add, remove, or substitute a configuration of another embodiment.

### Reference Signs List

- 1: Vehicle
- 2: Autonomous driving control device
- 100: Map provision device
- 110: Communication unit
- 120: Map update unit
- 130: Map storage unit
- 131: High definition map information
- 132: Lane link
- 133: Road boundary line
- 134: Home (destination)
- 135: Parking space
- 140: Position information acquisition unit
- 150: Map output unit
- 1625: Shape information start point (stop point)
- 1627: Shape information end point
- L: Lane

## Claims

1. A map provision device that provides high definition map information to an autonomous driving control device, comprising:
a map storage unit that stores high definition map information including information on a lane link of a lane on which a vehicle travels;
a map update unit that adds, to the high definition map information, parking lot link information available for travel from the lane link to a predetermined parking space and updates the high definition map information; and
a map output unit that outputs the updated high definition map information to the autonomous driving control device,
wherein the map update unit adds parking lot link information corresponding to a parking method in the parking space to the high definition map information and generates updated new high definition map information.

2. The map provision device according to claim 1, wherein the map update unit adds, to the high definition map information, parking lot information in a shape corresponding to a region and a parking orientation of the parking space.

3. The map provision device according to claim 2, wherein when reverse parking that reverses a vehicle toward a parking lot and parks is required, the map update unit adds, to the high definition map information, parking lot link information for temporarily stopping on the lane and parking in reverse.

4. The map provision device according to claim 3, wherein the map update unit sets a shape information start point of the parking lot link on a position displaced toward a parking space from a center of the lane in a width direction.

5. The map provision device according to claim 1, wherein the map update unit divides the lane link in the high definition map information at a shape information start point of the parking lot link, and connects the lane link and the parking lot link at the shape information start point.

6. The map provision device according to claim 5, wherein when an origin or a destination is set, the map update unit adds, to the high definition map information, the parking lot link information of the origin or the destination set in the high definition map information, and updates to new high definition map information, and when update has already been made and the high definition map information of the origin or the destination includes the parking lot link information, the map update unit replaces it with the updated high definition map information.

7. The map provision device according to claim 6, wherein the map update unit receives the high definition map information and the parking lot link information from an external server, and adds, to the high definition map information, parking lot link information from the lane link to the predetermined parking space and updates.
